# EUROPEAN PATENT SPECIFICATION

(11) **EP 1 943 863 B1**
(45) Date of publication and mention of the grant of the patent: **23.02.2011**
(21) Application number: 06821195.2
(22) Date of filing: 18.10.2006
(51) Int. Cl.: H04W 24/04, H04W 36/08, H04W 84/12

(54) **COMMUNICATION NETWORK**
KOMMUNIKATIONSNETZ
RESEAU DE COMMUNICATION

(30) Priority: 28.10.2005 EP 05110105
(43) Date of publication of application: 16.07.2008
(73) Proprietor: Koninklijke Philips Electronics N.V., 5621 BA Eindhoven (NL)
(72) Inventor: VRANKEN, Paulus, J., G., 5656 AA Eindhoven (NL); WANG, Xiangyu, 5656 AA Eindhoven (NL); LINNARTZ, Johan, P., M., G., 5656 AA Eindhoven (NL)
(74) Representative: Van Velzen, Maaike Mathilde
(86) International application number: PCT/IB2006/053839
(87) International publication number: WO 2007/049192

(56) References cited:
- EP-A- 1 172 969
- US-A1- 2004 125 753
- US-A1- 2004 136 318
- CISCO SYSTEMS, INC.: "Cisco IOS Software Configuration Guide for Cisco Aironet Access Points, chapter 19, Configuring Repeater and Standby Access Points" CISCO IOS RELEASE 12.2(15)JA, [Online] April 2004 (2004-04), XP002424858 Retrieved from the Internet: URL:http://www.cisco.com/univercd/cc/td/do c/product/wireless/airo1100/accsspts/i1221 5ja/i12215sc/s15rep.pdf> [retrieved on 2007-03-15]
- MINYOUNG PARK ET AL: "Improving throughput and fairness for MIMO ad hoc networks using antenna selection diversity" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 5, 29 November 2004 (2004-11-29), pages 3363-3367, XP010758342 ISBN: 0-7803-8794-5

## Description

The present invention relates to communication networks, for example to wireless local area networks (WLANs) substantially conforming to standards such as IEEE 802.11 including its variants and extensions. Moreover, the invention also relates to access points (AP) operable in such communication networks. Furthermore, the present invention also relates to methods of communicating data in such communication networks.

Communication networks are known. Such networks are susceptible to being implemented as wireless local area networks (WLANs) wherein communication nodes included in such networks are operable to exchange data therebetween by wireless communication. Earlier WLAN standards, for example "Bluetooth" and IEEE 802.11, define communication protocols for communicating data at data rates of 1 to 2 Mbps by employing wireless transmissions at a wireless carrier frequency of substantially 2.4 GHz. Extensions to this IEEE 802.11 standard such as IEEE 802.11a are susceptible to enabling data rate approaching 54 Mbps at a wireless carrier frequency of substantially 5 GHz. For convenience, a phrase "IEEE 802.11" utilized herein is to be construed to relate to the IEEE 802.11 and its associated variants and extensions, for example IEEE 802.11a, IEEE 802.11b and IEEE 802.11g.

WLANs are susceptible to being affected by indoor propagation of wireless radiation being non-isotropic, for example due to attenuation and reflection of wireless radiation. Such lack of isotropy can result in a WLAN with regularly spatially distributed network nodes having certain spatial regions which are inadequately served by the nodes. Operation of the WLANs is further complicated when certain of the nodes of the WLANs are implemented as mobile devices, for example as "mobile stations" (MS), which move spatially relative to other nodes of the WLANs.

In contemporary communication networks such as WLANs, it is known that data communication capacity in the networks is operatively greatest when a frequency reuse factor pertaining to the networks is unity, namely that all communication cells of such networks utilize a same wireless radiation carrier frequency and exploit an entire extent of a corresponding communication bandwidth available. Such networks implemented with communication cells therein are conveniently referred to as "virtual cellular networks" (VCNs). VCNs implemented with a frequency reuse factor of substantially unity with full exploitation of a bandwidth available are potentially operable to provide increased reliability against multipath fading.

In known IEEE 802.11 standards, a communication node implemented as a mobile station (MS) is only permitted, at a given time, to associate with a single communication node when implemented as an access point (AP), namely the mobile station (MS) is restricted by the IEEE 802.11 standard to associate with just one access point (AP) at any given instance of time. In an event that the association between the mobile station (MS) and the access point (AP) at the given instance of time is compromised, for example when a quality of wireless reception is poor or degrades, the mobile station (MS) has to de-associate from its present access point (AP) and then associate with an alternative access point (AP) capable of providing improved wireless communication for the mobile station (MS).

Thus, contemporary WLANs conforming to the known IEEE 802.11 standards suffer a first problem that they are not able to best exploit macro-diversity within the WLANs such that the data communication capacity of the WLANs is not fully realized in practice. Moreover, a second problem pertains in that re-association of a mobile station (MS) from a first access point (AP) to another access point (AP) takes time, namely "hand-over" time; this hand-over time is a major limiting factor in providing "Quality of Service" (QoS). Quality of service (QoS) is concerned with guaranteeing constant bit rate channel allocations with constant delay and minimum jitter. Both the aforementioned IEEE 802.11a and IEEE 802.11b standards follow similar Medium Access Control (MAC) layer procedures. The WLAN MAC layer is based on CSMA/CA protocol and targets asynchronous traffic such as client-server data applications. Hence, the WLAN MAC layer lacks quality of service (QoS) considerations which are required for multimedia applications such as voice, video and audio. A third problem in WLANs conforming to the IEEE 802.11 standard is that adjacent cells of the WLAN are required to be configured in operation to employ mutually different wireless channels; such a restriction creates operating difficulties for WLANs conforming to IEEE 802.11 b and IEEE 802.11 g standards wherein the number of non-overlapping wireless channels permitted is restricted to three channels. In a published United States granted patent no. US6799054, multiple access points (APs), configured to operate at a mutually identical wireless carrier frequency and coupled to a high-speed backbone, for example via an Ethernet connection, are operable to simultaneously receive an uplink data packet transmitted by a mobile station (MS) in communication range of the multiple access points. The access points (APs) are further operable to arbitrate and coordinate their transmission of acknowledgement (ACK) packets to the mobile station (MS) over the high-speed backbone that interconnects them. In the aforesaid granted patent, it is disclosed that transmission of acknowledgement (ACK) packets has to be executed in a timely manner, for example within a time-frame of 10 microseconds. There is thereby provided a low-latency protocol implemented using a communication back-bone, for example Ethernet, which is operable to link multiple access points (APs). In practice, such an approach only adequately works for Ethernet hubs and requires provision of a separate PHY layer or a COMBO layer in associated communication protocols utilized.

In the context of WLAN conforming to the IEEE 802.11 standard, Flextronics Software Systems Ltd. has proposed a stand-by access point (AP). In Flextronics' proposal, a mobile station (MS) serviced from a first access point (AP1) is provided with a second access point (AP2) configured to run in a stand-by mode. The second stand-by mode access point (AP2) is operable to continuously monitor the first access point (AP1) in the same channel as the first access point (AP1). In a situation of the first access point (AP1) failing to respond, the second stand-by access point (AP2) takes over a role of servicing the mobile station (MS). However, hand-over from the first access point (AP1) to the second access point (AP2) involves de-association from the first access point (AP1) and association to the second access point (AP2) which is problematic when maintenance of quality of service (QoS) is desired.

US patent application no. US 2004/136318 concerns a group of wireless access points, only one of which is active at any given time. Inactive back-up access points periodically test for the presence of an active access point. If an access point is not found, one of the back-up access points becomes active.

The article "Cisco IOS Software Configuration Guide for Cisco Aironet Access Points, chapter 19, Configuring Repeater and Standby Access Points", Cisco IOS Release 12.2 (15) JA [Online] April 2004, XP002424858, describes how to configure an access point as a hot standby unit or as a repeater unit.

European patent no. EP 1172969 discloses a high-speed roaming method for a wireless local area network, which is capable of executing the roaming in a very short time by immediately applying a subscription operation to a neighboring access point having the best communication environment at a point of time when the beacon quality of the connected access point is lowered below the threshold value.

US patent application no. US 2004/125753 concerns a network comprising a plurality of access devices arranged in a spanning tree configuration to support communications among the plurality of computing devices. At least one of the plurality of access devices is configured to selectively intercept, store and forward requested data, thereby reducing traffic on the communication network.

The article "Improving throughput and fairness for MIMO ad hoc networks using antenna selection diversity", Minyoung Part et al, Global Telecommunications Conference, Globecom 2004, IEEE Dallas, TX, USA, , vol. 5, 29 Nov. 2004, pages 3363-3367, XP010758342 ISBN: 0-7803-8794-5, describes a MAC protocol that uses multiple antennas to mitigate both interference from neighboring transmitters and fading.

The present invention is thus directed to at least partially address the aforementioned problems and thereby provide communication between access points (APs) and mobile stations (MSs) in communication networks, for example WLANs; however, the present invention is potentially relevant to other types of communication networks other than WLANs.

An object of the present invention is to provide a communication network with an improved reliability and quality of communication therein. The invention is defined by the independent claims. The dependent claims define advantageous embodiments.

The invention is of advantage in that use of the assigned time slots for communicating individual acknowledgements is capable of enabling more efficient transfer of responsibility for communicating with the at least one station from one access point to another, thereby potentially enhancing reliability and quality of communication to the at least one station.

Optionally, the communication network is implemented such that only one of said plurality of access points is operable to provide the communication route to said at least one station at any given time. Such a manner of operation circumvents conflicts between access points as a sensing access point is effectively subordinate to an access point present providing a communication route to the station. More optionally, the time slots and operation of said access points are implemented to be a development from contemporary IEEE 802.11 standards, for example the IEEE 802.11e MAC standard.

Optionally, the communication network is implemented such that said at least one station and its corresponding access points are implemented as at least a part of a wireless local area network. The present invention when applied to a WLAN is potentially especially effective as it enables a mobile station roaming within the network to be substantially seamlessly coupled and de-coupled from one access point to another. Such seamless coupling is highly desirable for voice-over-Internet-protocol (VoIP) wherein the station is susceptible to being implemented as a mobile telephone, a personal data assistant (PDA), a portable computer or similar mobile computing hardware. Thus, in the communication network, the at least one station is optionally a mobile station susceptible to moving position spatially within the network relative to its corresponding access points.

Optionally, the communication network is implemented such that said access points for said at least one station are each individually assigned an associated time slot, and each access point is restricted in operation to transmitting an acknowledgement frame in its assigned time slot. More optionally, assignment of the time slots to corresponding access points is executed over a communication medium provided in the network.

In order to ensure backward compatibility with contemporary communication standards, in the communication network, the time slots are optionally temporally included between a SIFS period defining commencement of the time slots and a DIFS period defining termination of the time slots. DIFS and SIFS are defined in contemporary communication standards, for example in the IEEE 802.11 standards and extensions thereof, for example the IEEE 802.11 e MAC standard.

Optionally, the communication network is implemented such that said access points cooperating in operation with said at least one station are operable to perform a clear channel assessment within a period corresponding to not more than 50% of their assigned time slot. The expression "substantially 50%" is to be construed broadly, for example to include a range of 25% to 75%. Such rapid clear channel assessment is susceptible to enabling substantially instantaneous transfer of communication route from one access point to another.

Optionally, the communication network is implemented such that said access points cooperating in operation with said at least one station are operable to utilize a similar wireless communication channel. Utilization of the single channel is susceptible to enhancing data communication capacity of the communication network.

Embodiments of the present invention will now be described, by way of example only, with reference to the accompanying drawings wherein:
Fig. 1 is a schematic illustration of communication nodes of a wireless local area network (WLAN) operable according to the present invention, the network including several communication nodes, access points (APs) and mobile stations (MSs);
Fig. 2 is a schematic timing diagram for an IEEE 802.11 basic access mechanism employed in the network of Fig. 1;
Fig. 3 is a schematic diagram of a part of the network of Fig. 1, the diagram illustrating multiple access points (APs) operable to receive uplink transmissions from a single mobile station;
Fig. 4 is a schematic timing diagram of a signal of the network of Figure 1 operable according to the present invention, the timing diagram illustrating slotted timing of acknowledgements (ACK) in the signal;
Fig. 5 is a simplified flow-chart of steps executed within primary and secondary access points (APs) in communication range of a mobile station (MS);
Fig. 6 is a state-model diagram for an access point (AP) of the network of Figure 1 provided with time-slotted acknowledgement (ACK) communication facilities; and
Fig. 7 is a schematic diagram of signal frames including the signal as illustrated in Figure 4.

In overview, embodiments of the present invention are concerned with providing reliable and efficient communication from a first access point (AP) of a communication network, for example a wireless local area network (WLAN) generally conforming to the IEEE 802.11 standard including its various extensions, to a mobile station (MS). The embodiments include one or more additional access points (APs) which are operable to assume responsibility for providing a communication path to the mobile station (MS) in an event of communication between the first access point (AP) and the mobile station (MS) deteriorating or becoming unavailable. Management of the first access point (AP) in relation to the one or more additional access points (APs) is performed by utilizing a plurality of timing slot allocations for conveying acknowledgement messages (ACK) from the access points involved (APs).

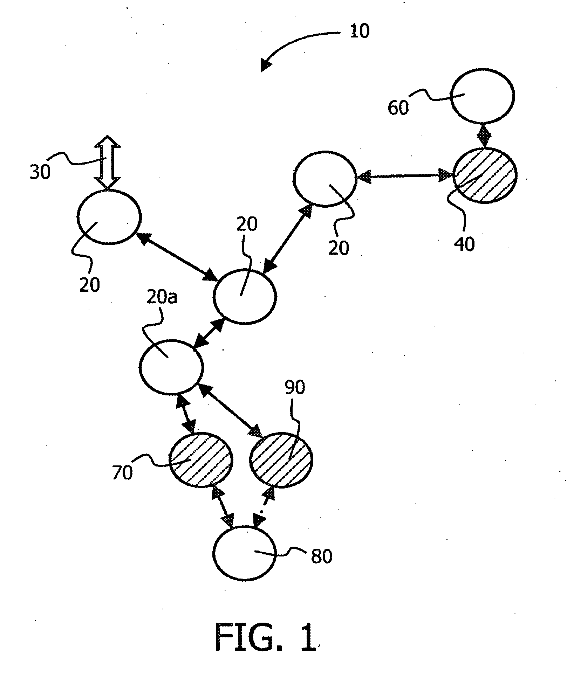

In order to set the present invention in context with regard to a communication network, reference is made to Figure 1. In Figure 1, there is shown the communication network indicated generally by 10. The network 10 is optionally implemented as a wireless local area network (WLAN) configured to function generally according to the IEEE 802.11 standard including its various extensions as elucidated earlier. The network 10 comprises a plurality of spatially distributed communication nodes denoted by 20. One or more of these nodes 20 can be coupled, as denoted by a bi-directional arrow 30, to other communication networks (not shown), for example to the Internet. Moreover, the nodes 20 can also be coupled to access points (APs), for example one of the communication nodes 20 shown is coupled in communication with an access point (AP) 40. Moreover, the access point (AP) 40 is operable to communicate with a mobile station (MS) denoted by 60. The communication nodes 20 together with the access point (AP) 40 can, for example, be spatially fixed communication units installed within a building or collection of buildings, for example a hospital, a factory, a warehouse, a container-handling harbor or domestic home to mention a few examples. The mobile station (MS) 60 can be potentially implemented in a variety of ways; for example, the mobile station 60 can be implemented as a portable computer, a cell phone, a mobile telephone, a personal data assistant (PDA), a mobile robotic device such as a steered vehicle, to mention a few examples.

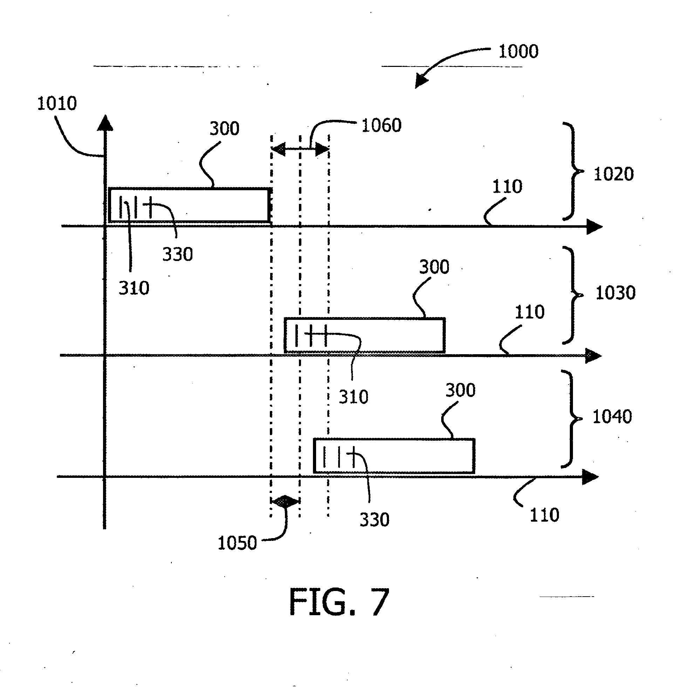

The network 20 also comprises a primary access point (AP1) denoted by 70 coupled in the network 10 between a communication node 20a of the network 10 and a mobile station (MS) denoted by 80. Bi-direction data communication is provided by the network 10 between the mobile station (MS) 80 via the primary access point (AP1) 70 to the communication node 20a and therefrom to other communication nodes 20 of the network 10. When implementing the present invention, the network 10 further includes a secondary access point (AP2) 90 also in communication with the communication node 20a. On account of limitations of the IEEE 802.11 standard generally employed when implementing the network 10, the mobile station (MS) 80 is not permitted to communicate concurrently through both access points (AP1, AP2) 70, 90, but only through the primary access point (AP1) 70. The secondary access point (AP2) 90 is operable, as will be elucidated in greater detail later with reference to Figure 7, to provide acknowledgements when it receives communications from the mobile station (MS) 80 but not to assist with communication to and from the mobile station (MS) 80 unless the primary access point (AP1) 70 ceases adequately supporting communication to and from the mobile station (MS) 80.

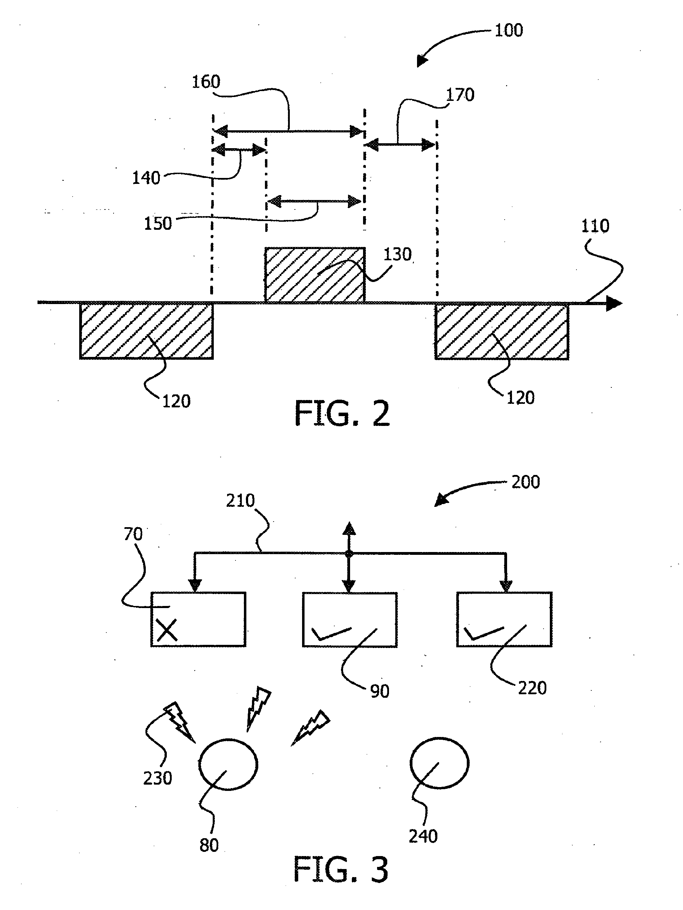

In order to further elucidate operation of the communication network 10, Figure 2 will now be described. In Figure 2, a timing diagram is indicated generally by 100. The timing diagram 100 represents an IEEE 802.11 distributed coordination function (DCF). DCF utilizes Carrier Sense Multiple Access (CSMA) with Collision Avoidance (CA), namely CSMA/CA. The timing diagram 100 includes a time axis 110 indicating progression of time from left to right. Moreover, the diagram 100 further includes sequences of MAC frames, wherein data frames are denoted by 120, and an acknowledgement frame is denoted by 130.

In operation, a mobile station (MS), for example the mobile station (MS) 80, with data frames 120 to transmit, senses wireless transmissions for a period denoted by 160; the period is known as a DIFS period or DCF inter-frame space. The mobile station (MS) 80 senses the wireless transmissions, to ensure that no other mobile stations (MS) are transmitting. This period 160 has a duration which is a sum of:
(a) a SIFS period 140; and
(b) an acknowledgement period 150; the acknowledgement period 150 is itself of a duration corresponding to twice a time slot.

A back off (BO) period 170 temporally separates an end of the DIFS and SIFS periods 140, 160 and commencement of transmission of a subsequent data frame 120. Actual values of the SIFS (Short IFS) period and the aforesaid time slot are determined by a physical layer used to implement the network 10, the physical layer being arranged to be generally in conformity with the IEEE 802.11 standard and its extensions.

In operation, if the wireless medium is not available, namely not "free", for example because other devices are transmitting wireless radiation, the mobile station (MS) 80 backs off for a period of time and then proceeds to re-sense the wireless medium. Conversely, if the wireless medium is sensed to be available, namely "free", a data frame 120 is transmitted by the mobile station (MS) 80. The access point (AP) 70 waits for a time period of SIFS and proceeds to respond by sending an acknowledgement (ACK) frame 130.

As elucidated in the foregoing, the contemporary standard IEEE 802.11 and its extensions only permit one access point (AP) to be associated with a mobile station (MS). Thus, according to the standard IEE 802.11, the secondary access point (AP2) 90 cannot concurrently function with the primary access point (AP1) 90 in servicing the mobile station (MS) 80; however, the present invention enables the secondary access point (AP2) to monitor communication between the primary access point (AP1) 70 and the mobile station (MS) 80 and to intervene to assume a role of the primary access point (AP1) 70 in an event of the primary access point (AP1) 70 ceasing to support communication to the mobile station 80, for example caused by the primary access point (AP1) 70 becoming non-operational. Moreover, the DCF presented in Figure 2 and associated description pertains to both uplink and downlink data flows between the primary access point (AP1) 70 and the mobile station (MS) 80.

Operation of the present invention will now be further described with reference to Figure 3. In Figure 3, a portion of the communication network 10 is indicated generally by 200, this portion comprising the primary access point (AP1) 70, the secondary access point (AP2) 90 as well as optionally a tertiary access point (AP3) 220; namely, the invention is susceptible to also being implemented when more than two access points are associated with the mobile station (80). The access points (AP1, AP2, AP3) 70,90, 220 are coupled via a communication link 210 to the aforesaid node 20a. Moreover, the access points (AP1, AP2, AP3) 70, 90, 220 are operable to utilize a mutually similar wireless communication frequency band, namely similar channel, and are all three capable in operation of simultaneously receiving uplink packets sent by the mobile-station (MS) 80. A problem addressed by the present invention in the portion 200 of the network 10 is that the multiple access points (AP) 70, 90, 220 are capable of receiving uplink packets sent as wireless transmissions 230 from the mobile station (MS) 80; in order to maintain for the mobile station (MS) 80, for example in order to substantially comply with the IEEE 802.11 standard, it is important that one and only one acknowledgement (ACK) is sent by a given selected access point (AP) between the aforesaid SIFS and DIFS time periods 140, 160 respectively after receiving the data packet 120. Such operation is necessary, even in the presence of other mobile stations (MS), for example a mobile station (MS) 240.

In order to substantially comply with the contemporary IEEE 802.11 standard and yet enable alternative access point (APs) to assume a role of supporting communication to a mobile station (MS), the present invention concerns a slotted acknowledgement mechanism. This slotted acknowledgement mechanism is susceptible to being implemented to fall substantially within the IEEE 802.11 standard, although other implementations are possible with in connection with other standards. The IEEE 802.11 standard defines two mechanisms for sharing access to a radio resource, namely wireless communication channels; the two mechanisms concern a Distributed Coordination Function (DCF) and a Point Coordination Function (PCF). The slotted acknowledgement mechanism of the present invention is pertinent to both PCF and PCF functions. When further describing the present invention, utilization of the mechanism in connection with DCF will be especially described.

The present invention is concerned with enabling multiple access point (APs) to respond by each sending an acknowledgement (ACK) to an uplink transmission from a single mobile station (MS) or similar single client. When implementing the present invention, transmission of an acknowledgement (ACK) frame has to be commenced before the mobile station (MS) or client considers its uplink transmission to be failure. When conforming substantially to the aforementioned IEEE 802.11 and IEEE 802.11e MAC standards, a period of time for transmitting an acknowledgement (ACK) potentially exists between aforesaid SIFS 140 and DIFS 160, see Figure 2. DIFS 160 is defined by these standards to be substantially two slot times as elucidated earlier with reference to Figure 2.

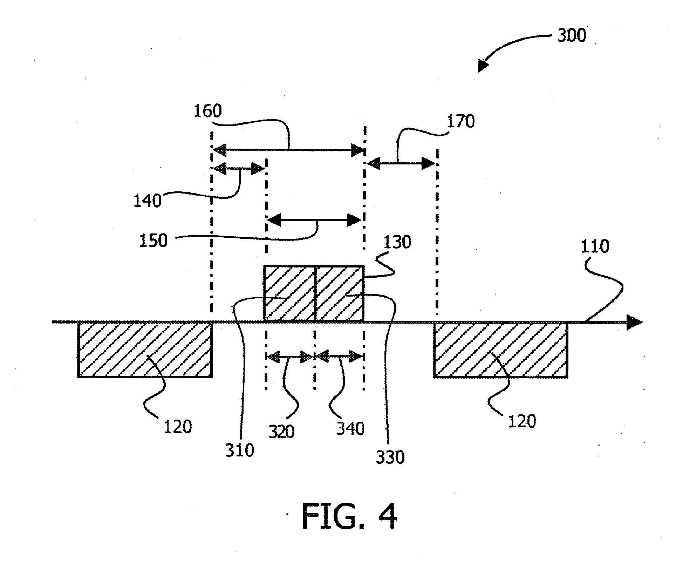

In order to avoid communication collisions when multiple access points (APs) respond with their respective acknowledgements, a period 150 between SIFS 140 and DIFS 160 is sub-divided into temporally-punctuated acknowledgement slots (ACK-slots) as illustrated in a time graph indicated generally by 300 in Figure 4; the temporally-punctuated acknowledgement slots (ACK-slots) are denoted in the graph 300 by 310, 330 corresponding to durations 320, 340 respectively. Preceding assignment of the acknowledgement slots 310, 330 is performed over a suitably cooperating communication medium, for example over wireless local area network (WLAN) or legacy Ethernet, although other communication media are possible to employ for such assignment.

As elucidated in the foregoing, the IEEE 802.11 standard only permits a mobile station (MS), namely a mobile client, to communicate with a single access point (AP). To ensure substantial compatibility when,implementing the present invention, for example in the network 10, the mobile station (MS) must remain under an impression that it is only communicating via one access point (AP) at any given moment. Such a constraint results in a concept of primary and secondary access points (AP1, AP2) within a slotted mechanism as depicted in Figure 4; such primary and secondary access points (AP1, AP2) have earlier been generally described with reference to the access points 70, 90 in Figure 1. The primary access point (AP1), for example the access point (AP1) 70, is substantially operable as any IEEE 802.11 (legacy) access point performing functions including one or more of: transmitting beacons, handling up- and down-link traffic and performing authentication and de-authentication of mobile stations (MSs), namely clients. The second access point (AP2), for example the access point (AP2) 90, is to be considered as a quiet helper, namely it is operable to only transmit an acknowledgement (ACK) when it does not detect, namely "hear", an acknowledgement (ACK) sent from the primary access point (AP1), for example from the primary access point (AP1) 70; the primary access point (AP1) when operating correctly transmits its acknowledgement signal in the first slot 310 of duration 320 as depicted in Figure 4. Thus, when implementing the present invention, the first acknowledgement slot (ACK-slot 1) 310 is allocated to the primary access point (AP1), for example the access point 70, and the second acknowledgement slot (ACK-slot 2) 330 is allocated to the secondary access point (AP2), for example the access point 90. Although only two acknowledgement slots 310, 330 are illustrated in the graph 300 of Figure 4, it will be appreciated that more than two acknowledgement slots (ACK-slots) can be utilized if required, for example three or more slots, for example to enable the tertiary access point (AP3) 220 to participate. Inclusion of more than two acknowledgement slots 310, 330 is dependent upon the access points 70, 90, 220 being operative to process data packets faster so that more acknowledgement slots can be included in the period 150 between SIFS 140 and DIFS 160. It will be appreciated that although including the acknowledgement slots 310, 330 within a period between SIFS 140 and DIFS 160 substantially provides compatibility with the IEEE 802.11 standard and its extensions, for example IEEE 802.11 MAC, the present invention is susceptible to being utilized when timing requirements are relaxed, for example using larger SIFS 140 and DIFS 160 periods.

The present invention provides an opportunity for multiple access points (APs) to receive uplink data and respond by way of a corresponding acknowledgements (ACK) communicated by way of the acknowledgement slots (ACL-slots) associated with the multiple access points (APs). More robust communication of data to mobile stations (MS) is thereby possible. By configuring the access points 70, 90 220 to utilize a similar wireless channel frequency and to exploit a full associated wireless communication bandwidth at any given spatial location within the network 10, it is potentially feasible to arrange the network 10 to operate so that aggregate communication capacity of the network 10 is substantially optimized, namely maximized.

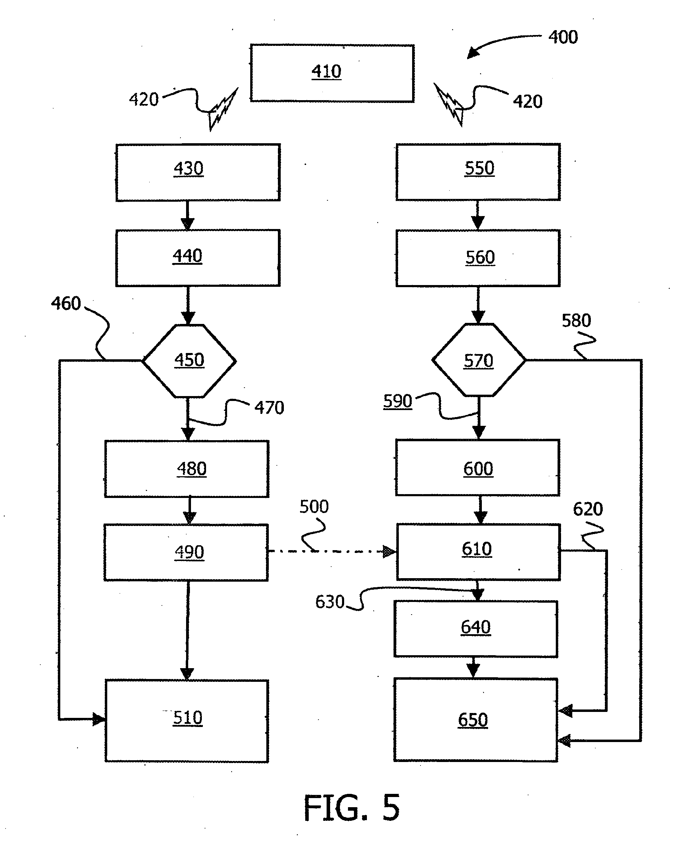

Operation of aforementioned primary and secondary access points (AP1, AP2) will now be further elucidated with reference to a flow chart indicated generally by 400 in Figure 5. Items presented in Figure 5 have an antecedent basis as described in Table 1.

**Table 1: antecedents for Figure 5**

| **Feature number** | **Antecedent definition** |
|---|---|
| 400 | The aforesaid flow chart |
| 410 | An uplink wireless transmission from the mobile station (MS) 80 |
| 420 | A wireless communication within the network 10 |
| 430 | A wireless communication received at the primary access point (AP1) 70 and also at the secondary access point (AP2) 90 |
| 440 | A decode operation applied to the communication received at the primary access point (AP1) 70 |
| 450 | A cyclic redundancy code (CRC) assessment decision executed at the primary access point (AP 1) 70 |
| 460 | A cyclic redundancy code (CRC) failure output decision path |
| 470 | A cycle redundancy code (CRC) success output decision path |
| 480 | A step for waiting until the SIFS period 140 has expired |
| 490 | A send acknowledgement (ACK) step |
| 500 | A wireless transmission receivable at the secondary access point (AP2) 90 |
| 510 | An idle state for the primary access point (AP1) 70 |
| 550 | A wireless communication received at the primary access point (AP1) 70 and also at the secondary access point (AP2) 90 |
| 560 | A decode operation applied to the communication received at the secondary access point (AP2) 90 |
| 570 | A cyclic redundancy code (CRC) assessment decision executed at the secondary access point (AP2) 90 |
| 580 | A cyclic redundancy code (CRC) failure output decision path |
| 590 | A cycle redundancy code (CRC) success output decision path |
| 600 | A step for waiting until the SIFS period 140 has expired |
| 610 | A step implementing Clear Channel Assessment (CCA) wherein the secondary access point (AP2) senses, namely "listens", to determine whether the wireless channel is free or busy |
| 620 | A decision output path when the channel is busy |
| 630 | A decision output path when the channel is free for a time duration corresponding to a slot allocated to the primary access point (AP1) 70 |
| 640 | A step for the secondary access point (AP2) 90 to send an acknowledgement in its corresponding acknowledgement slot |
| 650 | An idle state for the secondary access point (AP2) 90 |

The flow chart 400 will now be further elucidated with reference to Table 1 in conjunction with Figure 5. The mobile station (MS) 80 transmits the uplink transmission 410, namely uplink transmission (Tx) from the client, which is received at both the primary and the secondary access points (AP1, AP2) 70, 90, namely by way of transmissions being received 430, 550. The received transmissions 430, 550 are decoded in the decode operations 440, 560 to generate corresponding decoded data. The decoded data is subject to the cyclic redundancy code (CRC) assessments 450, 570 to determine whether or not the data is devoid of errors and pertains to the network 10, namely is not interference arising from some external uncorrelated source. In a situation wherein the decoded data from the assessment decisions 450, 570 is found to be afflicted by errors and/or not pertaining to the network 10, the access points (AP1, AP2) 70, 90 progress via the decision paths 460, 580 respectively to the idle states 510, 650 respectively. Conversely, in an alternative situation wherein the decoded data from the assessment decisions 450, 570 is found to be free of errors and pertaining to the network 10, the access points (AP1, AP2) 70, 90 progress via steps 480, 600 to wait for expiry of the SIFS period 140. In the step 490, when the primary access point (AP1) 70 is correctly functional, the access point (AP1) sends an acknowledge using the aforesaid first slot 310; the acknowledgement is received via the wireless transmission at the secondary access point (AP2) 90 as well as at the mobile station (MS) 80; thereafter the primary access point (AP1) 70 progresses to the idle state 510 until further transmission is received from the mobile station (MS) 80 or from the network 10 to be conveyed to the mobile station (MS) 80. In the step 610 implementing the Clear Channel Assessment (CCA) in the secondary access point (AP2) 90, if the step 610 detects that the primary access point (AP1) 70 is correctly operating, the secondary access point (AP2) 90 progresses via the decision output path 620 to the idle state 650. Conversely, in the step 610 implementing the Clear Channel Assessment (CCA) in the secondary access point (AP2) 90, if the step 610 detects that the primary access point (AP1) is not correctly operating or has failed, the secondary access point (AP2) waits until a time corresponding to the acknowledgement slot 330 and then sends its acknowledgement in the decision path 630 to inform the mobile station (MS) 80 that it has now to assume responsibility for providing a communication route from the network 10 to the mobile station (MS) 80; thereafter, the secondary access point (AP2) 90 progresses to the idle state 650 awaiting further communication from the mobile station (MS) 80 or from the network 10.

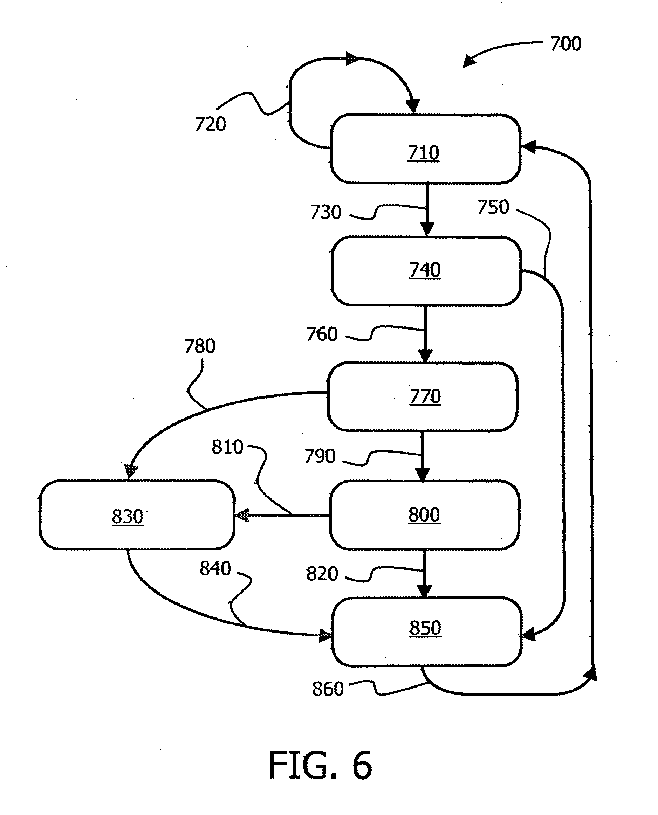

Thus, in overview, in a sequence of steps represented by the flow chart 400, during Clear Channel Assessment (CCA), the secondary access point (AP2) 90 is operable to sense, namely "listen", to determine whether or not the wireless channel is free. Only in a situation wherein the channel is free during a whole acknowledgement slot, for example during the acknowledgement slot 310, the secondary access point (AP2) 90 is operable to transmit an acknowledgement frame. In practice, a Clear Channel Assessment (CCA), namely the step 610, takes substantially in an order of half the time slot 320, 340 or less; there is thereby sufficient temporal tolerance to accommodate and thereby overcome temporal synchronization errors. In order to further elucidate the present invention, a state model of a given one of the access points (AP1, AP2) 70, 90 is provided in Figure 6 wherein temporally-slotted acknowledgements are employed.

In Figure 6, the state model is indicated generally by 700. Various states in the model 700 are given by antecedents in Table 2.

**Table 2: antecedents for Figure 6**

| **Feature number** | **Antecedent definition** |
|---|---|
| 700 | The state model for an access point (AP) of the network 10 |
| 710 | A wait channel state ' |
| 720 | A channel free but transmission preamble not OK path |
| 730 | A preamble OK path |
| 740 | A cyclic redundancy code (CRC) decode state |
| 750 | A CRC decode failure path |
| 760 | A CRC decode success path |
| 770 | A wait SIFS state |
| 780 | A primary access point (AP1) active path |
| 790 | A secondary access point (AP2) active path |
| 800 | A clear channel assessment (CCA) state |
| 810 | An action path invoked when the primary access point (AP1) is found in the state 800 to be inactive requiring the secondary access point (AP2) to act to maintain communication to the mobile station (MS) |
| 820 | An action path invoked when the CCA state 800 senses that the channel is busy, namely the primary access point (AP1) has provided a temporally-slotted acknowledgement |
| 830 | A send acknowledgement state compliant with the temporally-slotted arrangement as depicted in Figure 4 |
| 840 | A path representative of a temporally-slotted acknowledgement having been sent, for example to the mobile station (MS) |
| 850 | An idle state |
| 860 | A receive mode path |

The state model 700 follows in operation a sequence of events as illustrated by way of interconnection topology in Figure 6. The clear channel assessment (CCA) state 800 is important in determining whether or not the secondary access point (AP2) is required to assume responsibility for providing a communication route to and from the mobile station (MS).

Although the state model 700 is shown pertaining only to the primary and secondary access points (AP1, AP2), it will be appreciated that the state model 700 can be adapted to describe a situation wherein the primary access point (AP1) is monitored for correct operation by the secondary access point (AP2), and, in turn, the secondary access point (AP2) is monitored by the tertiary access point (AP3) for correct operation. If required, more than three access points (AP2) can optionally be utilized. The network 10 is thereby capable of being provided with multiple levels of backup in its access points (APs) for ensuring more reliable communication to mobile stations (MS) or similar coupled to the network 10.

Referring to Figure 7, the access points (70, 90) are operable to send their associated acknowledgements in signals conveyed in the network 10 by way of frames, for example as depicted in Figure 4. Various signals propagating in the network 10 are denoted generally by 1000 and are presented with reference to the aforesaid abscissa time axis 110 and an ordinate signal value axis 1010. Acknowledgement frame signals 1020, 1030, 1040 correspond to the mobile station (MS) 80, the primary access point (AP1) 70 and the secondary access point (AP2) 90 respectively. After the uplink signal 1020 is sent from the mobile station (MS) 80 via the primary access point (AP1) 70, the primary and secondary access points (AP1, AP2) 70, 90 are capable of acknowledging receipt of the uplink signal by including data in their associated temporal slots 310, 330 included in the signals 1030, 1040.

In operation, when functioning to provide a first communication path to the mobile station 80, the first access point (AP1) 70 is operable to commence sending its acknowledgement signal 1020 within a predetermined first temporal delay 1050. The secondary access point (AP2) 90 is operable to monitor operation of the first access point (AP1) 70 and determine whether or not the first access point (AP1) 70 has sent its acknowledgement signal 1030 by an end of a second temporal delay 1060 as illustrated. In an event that the first access point (AP1) 70 has not sent its acknowledgement signal 1030 by the end of the second temporal delay 1060, namely the first access point (AP1) 70 is not able to provide the first communication route, the second access point (AP2) 90 is operable to send its acknowledgement signal 1040 commencing before the end of the second temporal delay 1060. However, the second access point (AP2) 90 is configured so that it does not commence sending its acknowledgement signal 1040 before the end of the first temporal delay 1050. The node 20a is thereby provided with information regarding which of the access points (AP1, AP2) 70, 90 is capable of providing communication routes therethrough to the mobile station (MS) 80 without signal conflicts arising between the primary and secondary access point (AP1, AP2) 70, 90.

The first and second temporal delays 1050, 1060 are selected so that the primary and secondary access points (AP1, AP2) 70, 90 are potentially operable to provide their acknowledgement frame signals 1030, 1040 before any timing-out occurs. Moreover, sensing in the access points (AP1, AP2) 70, 90 is performed in the temporal slots 310, 330. The first and second temporal delays 1050, 1060 also determine a hierarchical order in which, for example, the access points (AP1, AP2, AP3) 70, 90, 220 assume responsibility for ensuring that communication in ensured to and from the mobile station (MS) 80 to the node 20a.

It is to be noted that the temporal slots 310, 330 are included before corresponding message data and not embedded within such message data, for example as depicted schematically in Figure 7 for the acknowledgement signals 1020, 1030, 1040.

In an example implementation of the network 10, the primary access points (AP1, AP2) 70, 90 can be configured so that, in an event of the primary access point (AP1) 70 failing in operation to provide a communication route therethrough and the secondary access point (AP2) 90 then assuming responsibility for providing a communication path, the primary access point (AP1) 70 in returning to operation again can monitor the secondary access point (AP2) 90 and re-assume responsibility for communicating with the mobile station (MS) 80 in an event of the secondary access point (AP2) 90 subsequently failing to provide a communication route therethrough or becoming otherwise non-operative. The primary and second access points (AP1, AP2) 70, 90 are therefore capable of being configured to be mutually supportive to ensure a more reliable communication route therethrough. Such mutual support is susceptible to being extended to more than two access points (AP1, AP2) 70, 90, for example also to include the tertiary access point (AP3) 220.

Thus, it is difficult to provide wireless communication coverage using contemporary WLAN installations, wherein data communication capacity is sacrificed to provide increased spatial coverage. Conventionally, adding even a single additional conventional access point (AP) can require careful planning and a site survey. Moreover, such an additional conventional access point (AP) can provide one or more of the following problems:
(a) limited additional spatial range at high data communication rates for additional access points added;
(b) edge users where addition access points are added are potentially susceptible to clogging up wireless air-time within the network 10 itself when implemented in a conventional manner;
(c) dramatically reduced data communication throughput caused by multiple users;
(d) data-rate adaptation may be required to enable the network 10 when implemented in a conventional manner to perform adequately; and
(e) large collision domains and co-channel interference within the network 10 when implemented in a conventional manner caused by re-use of wireless frequencies.

The present invention is capable of addressing one of more of the problems (a) to (e) associated with contemporary WLAN implementations. Access points (APs) provided with temporally-slotted acknowledgement capabilities as depicted, for example, in Figure 4 enable communication coverage to be provided over an area in a blanket manner. Moreover, the temporally-slotted acknowledgement capabilities enable the network 10 to be operable without it being subdivided into cells as is conventional practice, namely access points in the network 10 implemented pursuant to the present invention can be spatially placed ubiquitously, namely substantially wherever convenient. Furthermore, the present invention is susceptible to being implemented substantially in conjunction with an Ethernet hub or switch, and is applicable in the legacy IEEE 802.11 MAC standard as well as an upcoming IEEE 802.11E QoS MAC standard. Additionally, WLANs operating pursuant to the present invention with temporally-slotted acknowledgement capabilities are susceptible to accommodating in operation more users at relatively higher data rates in comparison to WLANs implemented in a contemporary manner.

WLANs implemented pursuant to the present invention are potentially especially well suited for medical and industrial WLANs which are required to function to a high degree of reliability and provide extensive spatial coverage, for example in hospitals, in chemical plants, in nuclear plants, in naval vessels such as container carriers. Moreover, such WLANs pursuant to the present invention are also potentially operable to provide high-density service areas whereat conventionally co-channel interference and "hot-spots" of communication congestion can often arise. WLANs implemented pursuant to the present invention are potentially useable in domestic wireless networks, namely "home networks", as well as for implementing zero-handover-latency networks for supporting voice-over-Internet protocol (VoIP).

The nodes 20, 20a of the communication network 10, together with its access points (APs) 40, 70, 90 and its mobile stations (MS) 60, 80 are susceptible to being implemented using digital hardware, for example using application-specific integrated circuits (ASICs). Alternatively, their functionality can also be provided by using digital computing hardware operable to execute software instructions. Thus, appropriate generation of data messages for transmission and temporally-slotted acknowledgement messages as depicted in Figure 4 is susceptible to being achieved under software control.

Modifications to embodiments of the invention described in the foregoing are possible without departing from the scope of the invention as defined by the accompanying claims.

Expressions such as "including", "comprising", "incorporating", "consisting of, "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

## Claims

1. A communication network (10) comprising communication nodes (20, 20a, 40, 60, 70, 80, 90) operable to communicate data therebetween, wherein said communication nodes (20, 20a, 40, 60, 70, 80, 90) include at least one mobile station (80) and a first access point (70) operable to provide a first communication route to said at least one mobile station (80), and at least a second access point (90) for monitoring operation of the first access point (70), and for providing a second communication route to said at least one mobile station (80) in an event of said first access point (70) ceasing to provide said first communication route,
**characterized by** said monitoring occurring in operation during time slots (310, 320, 330, 340) individually assigned to said plurality of access points (70, 90), said time slots included within signals (300) communicated within the network (10) for the access points (70, 90) to acknowledge receipt of messages from or to said at least one mobile station (80).

2. A communication network (10) as claimed in claim 1, wherein only one of said plurality of access points (70, 90) is operable to provide the communication route to said at least one mobile station (80) at any given time.

3. A communication network (10) as claimed in claim 1, wherein said at least one mobile station (80) and its corresponding access points (70, 90) are implemented as at least a part of a wireless local area network.

4. A communication network (10) as claimed in claim 1, wherein the at least one mobile station (80) is susceptible to moving position spatially within the network relative to its corresponding access points (70, 90).

5. A communication network (10) as claimed in claim 1, wherein said access points (70, 90) for said at least one mobile station (80) are each individually assigned an associated time slot (310, 330), and each access point (70, 90) is restricted in operation to transmitting an acknowledgement frame in its assigned time slot (310, 330).

6. A communication network (10) as claimed in claim 1, wherein assignment of the time slots (310, 330) to corresponding access points (70, 90) is executed over a communication medium provided in the network (10).

7. A communication network (10) as claimed in claim 1, wherein said access points (70, 90) cooperating in operation with said at least one mobile station (80) are operable to perform a clear channel assessment within a period corresponding to not more than 25% to 75% of their assigned time slot.

8. A communication network (10) as claimed in claim 1, wherein said access points (70, 90) cooperating in operation with said at least one mobile station (80) are operable to utilize a wireless communication channel.

9. An access point (90) adapted to provide data communication in a communication network (10) comprising communication nodes (20, 20a, 40, 60, 70, 80, 90) operable to communicate data therebetween, said communication nodes (20, 20a, 40, 60, 70, 80, 90) including a first access point (70), at least one mobile station (80), and said access point (90), said access point (90) being operable to cooperate with said at least one mobile station (80), said at least one mobile station (80) being served by said first access point (70), said first access point (70) being operable to provide a first communication route to said at least one mobile station (80), said access point (90) being operable for monitoring operation of the first access point (70), and for providing a second communication route to said at least one mobile station (80) in an event of said first access point (70) ceasing to provide the first communication route,
**characterized by** said monitoring being arranged to occur during time slots (310, 320, 330, 340) individually assigned to said access point (90) and said first access point (70), said time slots included within signals (300) communicated within the network (10) for the access point (90) and the first access point (70) to acknowledge receipt of messages from or to said at least one mobile station (80).

10. A method of communicating data in a communication network (10) comprising communication nodes (20, 20a, 40, 60, 70, 80, 90) operable to communicate data therebetween, said communication nodes (20, 20a, 40, 60, 70, 80, 90) including access points (40, 70, 90) and at least one mobile station (60, 80), said access points (40, 70, 90) being operable to provide communication to the at least one mobile station (60, 80), wherein said method includes steps of:
(a) configuring the network (10) so that said at least one mobile station (80) is operable to cooperate with a plurality of corresponding access points (70, 90); and
(b) providing a first communication route between a first access point (70) of said plurality of access points (70, 90) and said at least one mobile station (80);
(c) at least a second access point (90) of said plurality of access points (70, 90) monitoring operation of the first access point (70);
(d) configuring said at least a second access point (90) to provide a second communication route to said at least one mobile station (80) in an event of said first access point (70) ceasing to provide said first communication route;
**characterized by** said monitoring being arranged to occur during time slots (310, 320, 330, 340) individually assigned to said plurality of corresponding access points (70, 90), said time slots included within signals (300) communicated within the network (10) for the access points (70, 90) to acknowledge receipt of messages from or to said at least one mobile station (80).

11. A method as claimed in claim 10, said method including a step of configuring said access points (70, 90) to cooperate in operation with said at least one mobile station (80) so as to perform a clear channel assessment within a period corresponding to not more than 25% to 75% of their assigned time slot (310, 330).

12. A method as claimed in claim 10, said method including a step of configuring said access points (70, 90) cooperating in operation with said at least one mobile station (80) to utilize a wireless communication channel.

## Patentansprüche

1. Kommunikationsnetz (10) mit Kommunikationsknoten (20, 20a, 40, 60, 70, 80, 90), die betriebsfähig sind, um Daten zwischen einander zu kommunizieren, wobei die genannten Kommunikationsknoten (20, 20a, 40, 60, 70, 80, 90) mindestens eine Mobilstation (80) und einen ersten Zugangspunkt (70) umfassen, der betriebsfähig ist, um einen ersten Kommunikationsweg zu der genannten mindestens einen Mobilstation (80) bereitzustellen, und mindestens einen zweiten Zugangspunkt (90) zum Überwachen der Funktion des ersten Zugangspunktes (70) und zum Bereitstellen eines zweiten Kommunikationsweges zu der genannten mindestens einen Mobilstation (80) in dem Fall, dass der genannte erste Zugangspunkt (70) aufhört, den genannten ersten Kommunikationsweg bereitzustellen,
**dadurch gekennzeichnet, dass** das genannte Überwachen im Betrieb während Zeitschlitzen (310, 320, 330, 340) erfolgt, welche der genannten Vielzahl von Zugangspunkten (70, 90) einzeln zugewiesen werden, wobei die genannten Zeitschlitze innerhalb der innerhalb des Netzes (10) kommunizierten Signale (300) für die Zugangspunkte (70, 90) enthalten sind, damit diese den Empfang von Nachrichten von oder zu der genannten mindestens einen Mobilstation (80) quittieren.

2. Kommunikationsnetz (10) nach Anspruch 1, wobei immer nur einer der genannten Vielzahl von Zugangspunkten (70, 90) betriebsfähig ist, um den Kommunikationsweg zu der genannten mindestens einen Mobilstation (80) bereitzustellen.

3. Kommunikationsnetz (10) nach Anspruch 1, wobei die genannte mindestens eine Mobilstation (80) und ihre entsprechenden Zugangspunkte (70, 90) als mindestens ein Teil eines drahtlosen lokalen Netzwerks ausgeführt sind.

4. Kommunikationsnetz (10) nach Anspruch 1, wobei die mindestens eine Mobilstation (80) dafür empfänglich ist, die Position räumlich innerhalb des Netzes in Bezug auf ihre entsprechenden Zugangspunkte (70, 90) zu verändern.

5. Kommunikationsnetz (10) nach Anspruch 1, wobei den genannten Zugangspunkten (80, 90) für die genannte mindestens eine Mobilstation (80) jeweils einzeln ein zugehöriger Zeitschlitz (310, 330) zugewiesen wird, und jeder Zugangspunkt (70, 90) im Betrieb darauf beschränkt ist, einen Quittierungsrahmen in seinem zugewiesenen Zeitschlitz (310, 330) zu senden.

6. Kommunikationsnetz (10) nach Anspruch 1, wobei das Zuweisen der Zeitschlitze (310, 320) zu entsprechenden Zugangspunkten (70, 90) über ein in dem Netz (10) bereitgestelltes Kommunikationsmedium ausgeführt wird.

7. Kommunikationsnetz (10) nach Anspruch 1, wobei die genannten Zugangspunkte (70, 90), die im Betrieb mit der genannten mindestens einen Mobilstation (80) zusammenarbeiten, betriebsfähig sind, um eine Beurteilung der Kanalfreiheit (Clear Channel Assessment) innerhalb eines Zeitraums durchzuführen, der nicht mehr als 25% bis 75% ihres zugewiesenen Zeitschlitzes entspricht.

8. Kommunikationsnetz (10) nach Anspruch 1, wobei die genannten Zugangspunkte (70, 90), die im Betrieb mit der genannten mindestens einen Mobilstation (80) zusammenarbeiten, betriebsfähig sind, um einen drahtlosen Kommunikationskanal zu nutzen.

9. Zugangspunkt (90), der dafür ausgelegt ist, eine Datenkommunikation in einem Kommunikationsnetz (10) mit Kommunikationsknoten (20, 20a, 40, 60, 70, 80, 90) zu schaffen, die betriebsfähig sind, um Daten zwischen einander zu kommunizieren, wobei die genannten Kommunikationsknoten (20, 20a, 40, 60, 70, 80, 90) einen ersten Zugangspunkt (70), mindestens eine Mobilstation (80) und den genannten Zugangspunkt (90) umfassen, wobei der genannte Zugangspunkt (90) betriebsfähig ist, um mit der genannten mindestens einen Mobilstation (80) zusammenzuarbeiten, wobei die genannte mindestens eine Mobilstation (80) durch den genannten ersten Zugangspunkt (70) bedient wird, wobei der genannte erste Zugangspunkt (70) betriebsfähig ist, um einen ersten Kommunikationsweg zu der genannten mindestens einen Mobilstation (80) bereitzustellen, wobei der genannte Zugangspunkt (90) betriebsfähig ist, um die Funktion des ersten Zugangspunktes (70) zu überwachen und einen zweiten Kommunikationsweg zu der genannten mindestens einen Mobilstation (80) in dem Fall bereitzustellen, dass der genannte erste Zugangspunkt (70) aufhört, den genannten ersten Kommunikationsweg bereitzustellen,
**dadurch gekennzeichnet, dass** das genannte Überwachen derart vorgesehen, dass es während Zeitschlitzen (310, 320, 330, 340) erfolgt, welche dem genannten Zugangspunkt (90) und dem genannten ersten Zugangspunkt (70) einzeln zugewiesen werden, wobei die genannten Zeitschlitze innerhalb der innerhalb des Netzes (10) kommunizierten Signale (300) für den Zugangspunkt (90) und den ersten Zugangspunkt (70) enthalten sind, damit diese den Empfang von Nachrichten von oder zu der genannten mindestens einen Mobilstation (80) quittieren.

10. Verfahren des Kommunizierens von Daten in einem Kommunikationsnetz (10) mit Kommunikationsknoten (20, 20a, 40, 60, 70, 80, 90), die betriebsfähig sind, um Daten zwischen einander zu kommunizieren, wobei die genannten Kommunikationsknoten (20, 20a, 40, 60, 70, 80, 90) Zugangspunkte (40, 70, 90) und mindestens eine Mobilstation (60, 80) umfassen, wobei die genannten Zugangspunkte (40, 70, 90) betriebsfähig sind, um eine Kommunikation zu der mindestens einen Mobilstation (60, 80) bereitzustellen, wobei das genannte Verfahren die folgenden Schritte umfasst:
(a) Konfigurieren des Netzes (10) derart, dass die genannte mindestens eine Mobilstation (80) betriebsfähig ist, um mit einer Vielzahl von entsprechenden Zugangspunkten (70, 90) zusammenzuarbeiten; und
(b) Schaffen eines ersten Kommunikationsweges zwischen einem ersten Zugangspunkt (70) der genannten Vielzahl von Zugangspunkten (70, 90) und der genannten mindestens einen Mobilstation (80);
(c) durch mindestens einen zweiten Zugangspunkt (90) der genannten Vielzahl von Zugangspunkten (70, 90) Überwachen der Funktion des ersten Zugangspunktes (70);
(d) Konfigurieren des genannten mindestens einen zweiten Zugangspunktes (90) zum Bereitstellen eines zweiten Kommunikationsweges zu der genannten mindestens einen Mobilstation (80) in dem Fall, dass der genannte erste Zugangspunkt (70) aufhört, den genannten ersten Kommunikationsweg bereitzustellen,
**dadurch gekennzeichnet, dass** das genannte Überwachen derart ausgelegt ist, dass es während Zeitschlitzen (310, 320, 330, 340) erfolgt, welche der genannten Vielzahl von Zugangspunkten (70, 90) einzeln zugewiesen werden, wobei die genannten Zeitschlitze innerhalb der innerhalb des Netzes (10) kommunizierten Signale (300) für die Zugangspunkte (70, 90) enthalten sind, damit diese den Empfang von Nachrichten von oder zu der genannten mindestens einen Mobilstation (80) quittieren.

11. Verfahren nach Anspruch 10, wobei das genannte Verfahren einen Schritt des Konfigurierens der genannten Zugangspunkte (80, 90) derart umfasst, dass diese im Betrieb mit der genannten mindestens einen Mobilstation (80) zusammenarbeiten, um eine Beurteilung der Kanalfreiheit (Clear Channel Assessment) innerhalb eines Zeitraums durchzuführen, der nicht mehr als 25% bis 75% ihres zugewiesenen Zeitschlitzes (310, 330) entspricht.

12. Verfahren nach Anspruch 10, wobei das genannte Verfahren einen Schritt des Konfigurierens der genannten Zugangspunkte (70, 90), die im Betrieb mit der genannten mindestens einen Mobilstation (80) zusammenarbeiten, um einen drahtlosen Kommunikationskanal zu nutzen.

## Revendications

1. Réseau de communication (10) comprenant des noeuds de communication (20, 20a, 40, 60, 70, 80, 90) exploitables pour communiquer des données entre eux, dans lequel lesdits noeuds de communication (20, 20a, 40, 60, 70, 80, 90) comprennent au moins une station mobile (80) et un premier point d'accès (70) exploitable pour fournir une première voie de communication vers ladite au moins une station mobile (80), et au moins un deuxième point d'accès (90) pour la surveillance du fonctionnement du premier point d'accès (70), et pour fournir une deuxième voie de communication vers ladite au moins une station mobile (80) dans un cas ou ledit premier point d'accès (70) cesserait de fournir ladite première voie de communication,
**caractérisé en ce que** ladite surveillance survient en cours de fonctionnement durant des créneaux horaires (310, 320, 330, 340) affectés individuellement à ladite pluralité de points d'accès (70, 90), lesdits créneaux horaires inclus au sein de signaux (300) communiqués dans le réseau (10) pour que les points d'accès (70, 90) accusent réception de message provenant de ou allant vers au moins une station mobile (80).

2. Réseau de communication (10) selon la revendication 1, dans lequel un seul parmi ladite pluralité de points d'accès (70, 90) est exploitable pour fournir la voie de communication à ladite au moins une station mobile (80) à n'importe quel moment donné.

3. Réseau de communication (10) selon la revendication 1, dans lequel ladite au moins une station mobile (80) et ses points d'accès correspondants (70, 90) sont mis en oeuvre en tant qu'au moins une partie d'un réseau local sans fil.

4. Réseau de communication (10) selon la revendication 1, dans lequel l'au moins une station mobile (80) est susceptible de changer de position spatiale au sein du réseau par rapport à ses points d'accès correspondants (70, 90).

5. Réseau de communication (10) selon la revendication 1, dans lequel lesdits points d'accès (70, 90) pour ladite au moins une station mobile (80) sont chacun individuellement affectés à un créneau horaire associé (310, 330), et chaque point d'accès (70, 90) est limité dans le fonctionnement à la transmission d'une trame d'accusé de réception dans son créneau horaire affecté (310, 330).

6. Réseau de communication (10) selon la revendication 1, dans lequel l'affectation des créneaux horaires (310, 330) à des points d'accès correspondants (70, 90) est exécutée sur un support de communication fourni dans le réseau (10).

7. Réseau de communication (10) selon la revendication 1, dans lequel lesdits points d'accès (70, 90) coopérant en fonctionnement avec ladite au moins une station mobile (80) sont exploitables pour exécuter une évaluation de canal dégagé au sein d'une période correspondant à pas plus de 25 % à 75 % de leur créneau horaire affecté.

8. Réseau de communication (10) selon la revendication 1, dans lequel lesdits points d'accès (70, 90) coopérant en fonctionnement avec ladite au moins une station mobile (80) sont exploitables pour utiliser un canal de communication sans fil.

9. Point d'accès (90) adapté pour fournir une communication de données dans un réseau de communication (10) comprenant des noeuds de communication (20, 20a, 40, 60, 70, 80, 90) exploitables pour communiquer des données entre eux, lesdits noeuds de communication (20, 20a, 40, 60, 70, 80, 90) comprenant un premier point d'accès (70), au moins une station mobile (80), et ledit point d'accès (90), ledit point d'accès (90) étant exploitable pour coopérer avec ladite au moins une station mobile (80), ladite au moins une station mobile (80) étant desservie par ledit premier point d'accès (70), ledit premier point d'accès (70) étant exploitable pour fournir une première voie de communication vers ladite au moins une station mobile (80), ledit point d'accès (90) étant exploitable pour la surveillance de fonctionnement du premier point d'accès (70), et pour fournir une deuxième voie de communication vers ladite au moins une station mobile (80) dans un cas où ledit premier point d'accès (70) cesserait de fournir la première voie de communication,
**caractérisé en ce que** ladite surveillance est agencée pour survenir durant des créneaux horaires (310, 320, 330, 340) individuellement affectés audit point d'accès (90) et audit premier point d'accès (70), lesdits créneaux horaires inclus au sein de signaux (300) communiqués dans le réseau (10) pour que le point d'accès (90) et le premier point d'accès (70) accusent réception de messages provenant de ou vers ladite au moins une station mobile (80).

10. Procédé de communication de données dans un réseau de communication (10) comprenant des noeuds de communication (20, 20a, 40, 60, 70, 80, 90) exploitables pour communiquer des données entre eux, lesdits noeuds de communication (20, 20a, 40, 60, 70, 80, 90) comprenant des points d'accès (40, 70, 90) et au moins une station mobile (60, 80), lesdits points d'accès (40, 70, 90) étant exploitables pour fournir une communication vers l'au moins une station mobile (60, 80), dans lequel ledit procédé comprend les étapes consistant à :
(a) configurer le réseau (10) de sorte que ladite au moins une station mobile (80) est exploitable pour coopérer avec une pluralité de points d'accès correspondants (70, 90) ; et
(b) fournir une première voie de communication entre un premier point d'accès (70) de ladite pluralité de points d'accès (70, 90) et ladite au moins une station mobile (80) ;
(c) au moins un deuxième point d'accès (90) de ladite pluralité de points d'accès (70, 90) surveillant le fonctionnement du premier point d'accès (70) ;
(d) configurer ledit au moins un deuxième point d'accès (90) pour fournir une deuxième voie de communication vers ladite au moins une station mobile (80) dans un cas où ledit premier point d'accès (70) cesserait de fournir ladite première voie de communication
**caractérisé en ce que** ladite surveillance est agencée pour survenir durant des créneaux horaires (310, 320, 330, 340) affectés individuellement à ladite pluralité de points d'accès correspondant (70, 90), lesdits créneaux horaires inclus au sein de signaux (300) communiqués dans le réseau (10) pour que les points d'accès (70, 90) accusent réception de message provenant de ou allant vers au moins une station mobile (80).

11. Procédé selon la revendication 10, ledit procédé comprenant une étape consistant à configurer lesdits points d'accès (70, 90) pour coopérer en fonctionnement avec ladite au moins une station mobile (80) de façon à exécuter une évaluation de canal dégagé dans une période correspondant à pas plus de 25 % à 75 % de leur créneau horaire affecté (310, 330).

12. Procédé selon la revendication 10, ledit procédé comprenant une étape consistant à configurer lesdits points d'accès (70, 90) coopérant en fonctionnement avec ladite au moins une station mobile (80) pour utiliser un canal de communication sans fil.
